# EUROPEAN PATENT SPECIFICATION

(11) **EP 0 424 090 B1**
(45) Date of publication and mention of the grant of the patent: **14.09.1994**
(21) Application number: 90311319.9
(22) Date of filing: 16.10.1990
(51) Int. Cl.: H02G 15/18, H02G 1/14, B29C 61/06

(54) **Elastomeric covering having conformable interior**
Abdeckung aus Elastomer mit anschmiegsamem Inneren
Recouvrement élastomère à intérieur souple

(30) Priority: 16.10.1989 US 421855
(43) Date of publication of application: 24.04.1991
(73) Proprietor: MINNESOTA MINING AND MANUFACTURING COMPANY, St. Paul, Minnesota 55133-3427 (US)
(72) Inventor: Ackland, Gordon L, ST Paul, Minnesota 55133-3427 (US); Wandmacher, A Robert, ST Paul, Minnesota 55133-3427 (US); Lowell, C Frank, ST Paul, Minnesota 55133-3427 (US); Wayne, F. Varner, ST Paul, Minnesota 55133-3427 (US)
(74) Representative: Baillie, Iain Cameron

(56) References cited:
- GB-A- 2 097 203
- US-A- 3 515 798
- US-A- 3 808 352
- US-A- 3 816 640

## Description

### Background of the Invention

### 1. Field of the Invention

The present invention generally relates to coverings for connections in electrical cables, and more particularly to a closure assembly constructed of pre-stretched elastomeric cover having an interior layer of conformable material.

### 2. Description of the Prior Art

Electrical cables, such as those used for telephone lines, high voltage lines, cable television, etc., can develop faults or breaks in the line due to manufacturing defects or environmental factors. Faults occur both in underground and aerial cables. Rather than replacing an entire section of such a cable, it is expedient to expose a portion of the cable, repair the fault, and place an enclosure about the splice. Splicing of electrical wires is similarly useful in the placement of successive cable sections, and in connection of an extra lead wire to a new or existing cable.

It is clearly desirable to securely enclose the splice, preventing the entry of water or other environmental contaminants which may degrade the splice connection. In the past, several different techniques have been used to achieve this goal, among them, the use of hand-built tape constructions, rigid shells, molded enclosures and pre-stretched (elastomeric) tubing. The simplest form of tape construction consists of a polymeric film backing having an adhesive layer which optionally contains a thicker layer of mastic or other sealant, as disclosed in U.S. Patent No. 3,852,516 issued to Vander Ploog et al. The tape is wrapped around, or folded over, the splice and the mastic forms an environmental seal. A self-hardening liquid compound may be injected under the tape, as shown in U.S. Patent No. 3,419,669 issued to Z. Dienes.

Unfortunately, enclosures which are this simple often do not completely seal the splice, especially if the splice is complicated or bulky. It is for this reason that multilayered tape constructions have been devised, as taught in U.S. Patent No. 4,767,893 issued to Ball et al. In that patent, a plastic sheet is wrapped around the splice, and secured to the cable sheaths using a vinyl-backed adhesive tape. An elastic tape is wrapped over the sheet and forms a thin waterproof barrier. A cloth strip is then wound around the elastic tape, the cloth being impregnated with a water-activatable urethane resin compound, and being immersed in water prior to application. After a short period of time, the urethane resin cures, leaving a water-impervious covering about the splice.

Tape constructions such as that shown in the Ball et al. patent suffer from the manifest disadvantage that the technique requires several steps, which increases the amount of time necessary to enclose the splice. Multilayered constructions also increase the chances of human error. The user has several opportunities to improperly apply one of the layers, and if a single tape layer develops a leak, then the integrity of the entire splice is compromised.

An alternative to tape construction is the use of rigid shells in forming the splice enclosure. The rigid shells are usually formed from either porcelain (ceramic) or a hard polymeric material, such as polypropylene. An insulating liquid may be provided within the shell (see, e.g., U.S. Patent No. 3,878,313 issued to Varner et al.), or a sealant may be injected after the enclosure has been positioned around the splice (see, e.g., U.S. Patents Nos. 3,836,694 issued to H. Kapell; and 4,060,583 issued to Groves et al.). The sealant material may be a dielectric as taught in U.S. Patent No. 3,655,565 issued to J. McDonald.

The primary disadvantage in the use of rigid enclosures is their limited applicability due to fixed shape and size. Articles of this nature which require injection of the sealant material further admit of the same disadvantages of tape constructions, viz., increased time in applying the enclosure and the possibility that the sealant material will not be properly introduced into the cavity inside the rigid shell. Of course, these articles also require an extrusion tool for the flowable sealant (sometimes a hot-melt adhesive), and allow for the possibility that the sealant itself may become contaminated during injection into the shell. Molded enclosures such as that shown in U.S. Patent No. 4,377,547 issued to H. Hervig, suffer similar problems.

The present invention overcomes these disadvantages by utilizing pre-stretched elastomeric tubing, also known as cold-shrink tubing. General use of pre-stretched tubing for splice enclosures is known. The tubing is stretched to an enlarged state, and a removable core is placed therein, as taught in U.S. Patent No. 3,515,798 issued to J. Sievert. An improved removable core is disclosed in U.S. Patent No. 4,503,105 issued to S. Tomioka. The pre-stretched tubing, with the core in place, is slipped over the cable to be repaired. After completing the connection, the tubing is positioned over the splice, and the core removed. The tubing then shrinks, retaining a residual annular stress and fitting snugly around the cable and connection. This construction greatly simplifies installation of the enclosure. Variations of this design exist, such as a skirted tubing shown in U.S. Patent No. 3,808,352 issued to L. Johnson; a conductive tubing disclosed in U.S. Patent No. 4,363,842 issued to P. Nelson; and a multilayered construction with semiconducting portions as depicted in U.S. Patent No. 3,816,640 issued to W. Varner.

The principal disadvantage in the use of existing pre-stretched tubing is that the conformability of the enclosure around the connection is significantly limited by the tubing durometer, its elasticity, and shape of the underlying surface. This results in inadequate sealing ability and air voids adjacent the connection which can lead to a fault. In this regard, the Sievert, Johnson and Tomioka patents each recognize that the underlying surface should be primed with a coating, such as an adhesive, mastic or silicone grease, or that the tubing itself should be wrapped with a mastic tape after being shrunk over the splice. It would, therefore, be desirable and advantageous to devise a closure assembly which may be utilized in the simple fashion that pre-stretched tubing is applied, but which has improved conformability to underlying surfaces without requiring the additional steps of priming the cable sheath, taping the enclosure, or injecting a sealant material.

Accordingly, the primary object of the present invention is to provide an enclosure for a connection in an electrical cable.

Another object of the invention is to provide an enclosure which has improved sealing ability.

Still another object of the invention is to provide such an enclosure which is applied to the connection in a single step, thereby reducing installation time and minimizing the chances of human error.

Yet another object of the invention is to provide an enclosure which easily seals irregularly shaped surfaces.

A further object of the invention is to provide a conformable material which eliminates air voids at interstices within a power cable accessory, thereby reducing susceptibility to electrical discharge.

### Summary of the Invention

The foregoing objects are achieved in an elastomeric conformable covering comprised of a pre-stretched tube fitted over a removable core, with an intermediate layer of conformable material placed between the tube and the core. In one embodiment, the conformable material is a mastic, and the outer surface of the core is coated with a release agent. The conformable material may include conductive or dielectric fillers. Variations of these embodiments are provided for in-line splices, end-seal splices and terminal insulators.

### Brief Description of the Drawings

The novel features of the invention are set forth in the appended claims. The invention itself, however, will best be understood by reference to the accompanying drawings, wherein:

Figure 1 is a perspective view of the in-line enclosure embodiment of the elastomeric conformable covering of the present invention.

Figure 2 is a longitudinal cross-section of the in-line enclosure taken along lines 2-2 of Figure 1.

Figure 3 is an axial cross-section of the in-line enclosure taken along lines 3-3 of Figure 2.

Figure 4 is similar to the longitudinal cross-section of Figure 2 but additionally illustrates installing the in-line enclosure about the cable splice.

Figure 5 is a longitudinal cross-section of the end-seal enclosure embodiment of the present invention over a cable prior to installation.

Figure 6 is a longitudinal cross-section of the skirted termination embodiment of the present invention.

### Description of the Preferred Embodiment

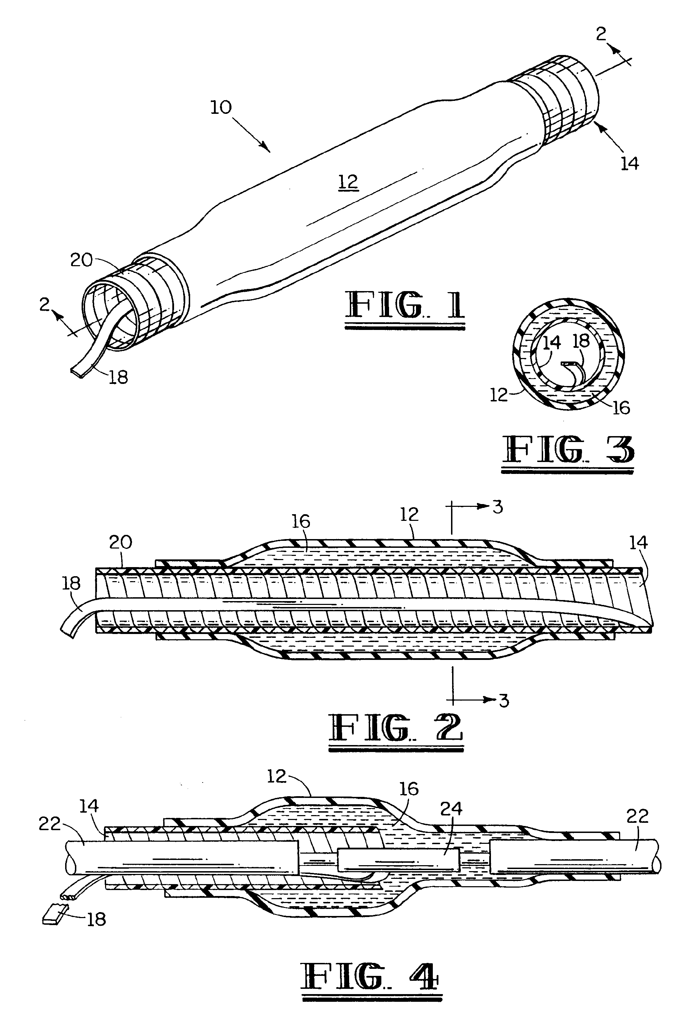

With reference now to the figures, and in particular with reference to Figures 1, 2 and 3, there is depicted the in-line splice enclosure embodiment **10** of the elastomeric conformable covering of the present invention. In-line splice enclosure **10** is generally comprised of a pre-stretched tube (PST) **12**, a removable core **14**, and a layer of conformable material **16** interposed between pre-stretched tube **12** and core **14**.

Pre-stretched tube **12**, in its relaxed state, is generally cylindrical, and may be formed of any elastomeric material, such as natural rubber, synthetic (silicone) rubber, styrene-butadiene rubber, polychloroprene, urethane rubber or ethylene propylene rubber (this list is not meant to be exhaustive). Pre-stretched tube **12** is typically fabricated by extrusion, and may be insulative or conductive. Conductivity may be imparted by the inclusion of additional ingredients such as carbon black, metallic flakes, etc. (see U.S. Patent No. 4,363,842 issued to P. Nelson). It is understood that the terms "tube" and "tubular" are not limited to objects having a circular cross-section, but rather denotes a hollow, elongated member of any cross-section.

The size of pre-stretched tube **12** may vary considerably, depending upon the size of the splice to be enclosed. The length of pre-stretched tube **12** should be greater than the length of the cable jacket opening, normally in the range of 5 centimeters to one meter. The diameter of pre-stretched tube **12** (in its relaxed state), should be smaller than the outer diameter of the cable or other sealing surface, in the range of three millimeters to twenty centimeters. Due to the elastic properties of pre-stretched tube **12**, a single diameter tube may conveniently be used on cables of varying diameter. Of course, in the expanded state shown in Figures 1 through 3, the diameter of pre-stretched tube **12** is greater than the diameter of the cable being repaired. The thickness of pre-stretched tube **12** (in its relaxed state) may vary from one millimeter to two centimeters.

Removable core **14** maintains pre-stretched tube **12** in a radially expanded state, and is also generally cylindrical and slightly longer than pre-stretched tube **12**. The diameter of removable core **14** may vary widely, the only practical requirement being that it is larger than the outer diameter of the cable being repaired, and providing sufficient clearance for the core to be unwound. Removable core **14** is constructed of any durable, flexible material, such as cellulose acetate butyrate, polypropylene, polyethylene or polyvinyl chloride. As discussed in U.S. Patent No. 3,515,798 issued to J. Sievert, core **14** has a helical groove formed by a continuous strip, adjacent coils being interconnected (a similar core may be fabricated by helically perforating a hollow cylinder). Core **14** may be collapsed by firmly pulling and unwinding the end **18** of the strip. The wall of core **14** typically has a thickness in the range of one millimeter to five millimeters. Two (or more) separate cores may be provided in a single enclosure for some applications in which case there would be two separate strips and two ends **18** to be pulled. For example, one large core and three smaller cores might be employed with a trifurcated elastomeric enclosure (molded rather than extruded), used when a cable is split into three conductors.

Conformable material **16** may take on a wide variety of characteristics depending upon the particular application made of the elastomeric conformable covering. It may be somewhat fluid, or viscous; adhesive or non-adhesive; insulative or conductive; and have a high or low electrical permittivity. For most applications, an insulative mastic is sufficient, such as polyisobutylene, ethylene propylene rubber, butyl rubber or mixtures of these compositions. Other materials may be used, such as caulk, silicone grease, cured or uncured elastomers having processing oils or rubber modifiers, liquid elastomers, plasticizers, or modified plastisols (this list also is not exhaustive). If a mastic is used as conformable material **16**, difficulties may arise in removing core **14** due to the tacky and pliable nature of the mastic. In this case, a coating **20** may be applied to the outer surface of removable core **14** in order to aid the release and separation of the core from the mastic. Alternatively, other means may be employed to assist removal of core **14**, such as rubber backed mastic (applied rubber side to core **14**), or a plastic film placed on core **14**. Conformable material **16** may additionally be provided with dielectric fillers. For power cables, conformable material **16** should have a dielectric constant greater than about 15.

For the in-line splice enclosure **10**, conformable material **16** is distributed evenly along the central portion of enclosure **10**, i.e., when applied the conformable material should extend at least one centimeter over the cable insulation (for a non-shielded medium-voltage splice). The amount of conformable material **16** used depends upon the size of the splice to be enclosed (i.e., both the outer diameter of the cable and the bulk of the splice connection itself). It may also depend on the voltage rating for the cable if dielectric material is to be used. As a general guideline, the radial thickness of the layer of conformable material **16** should be between one to three times the difference between the radii of connection and the conductor for the intended applications. It is preferable to have an excess amount of conformable material **16** to eliminate all air voids around the splice, and to provide a layer of conformable material **16** between the inside of pre-stretched tube **12** and the cable insulation.

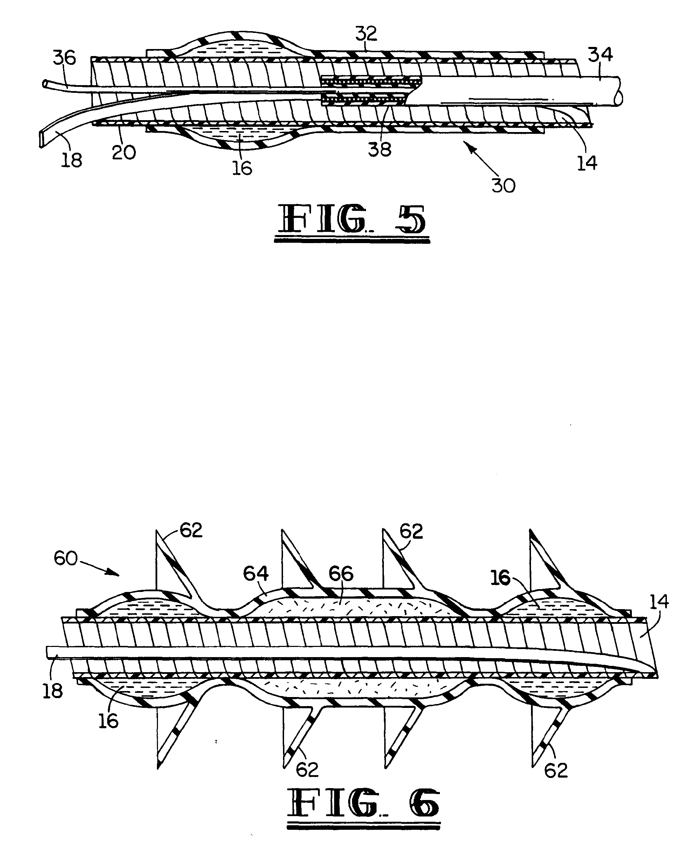

Referring now to Figure 4, use of in-line enclosure **10** is explained. In the most common situation, two cables sections **22** are joined to form a continuous cable length, such as when laying a new cable line. In-line enclosure **10** slides onto one of the two ends. A portion of the cable dielectric is cut back to expose a length of conductor. After the conductors are joined with an appropriate connector **24**, in-line enclosure **10** is centered over connector **24**. When the end **18** of the continuous strip forming core **14** is pulled and unwound, pre-stretched tube **12** shrinks radially around cable **22** and, under the pressure exerted by pre-stretched tube **12**, conformable material **16** fills any voids around connector **24**. Figure 4 illustrates the halfway point in the removal of core **14**. Thus, the elastomeric conformable covering is essentially installed in a single step, to-wit, pulling the end **18** of core **14**.

The use of a conformable material held inside pre-stretched tube **12** offers several advantages. It adds a cushion layer which reduces the chances of pre-stretched tube **12** being punctured from within. Sealing material **16** also fills in any air voids within enclosure **10**, and easily conforms around irregularly shaped connections. The single step application additionally minimizes installation time, and reduces field installation errors. Finally, provision of a sealing material without the need for injection precludes exposure of the material to environmental contaminants, and eliminates the use of special extrusion tools, and clean-up after the splice is enclosed. If a low viscosity material is used and the enclosures are to be stored in potentially high temperatures, constriction means (such as a cuff) may encircle the ends of pre-stretched tube **12** to prevent conformable material **16** from leaking out.

Figures 5 and 6 depict alternative embodiments of the elastomeric conformable covering of the present invention. An end-seal enclosure embodiment **30** for a concentric neutral power cable in a conduit **34** is shown in Figure 5. End-seal enclosure **30** is similar to in-line splice enclosure **10** except that conformable material **16** is present only near one end **32** of end-seal enclosure **30**. End-seal enclosure **30** utilizes conformable material **16** to seal around neutral wires **33** within conduit **34**. Neutral wires **33** surround an insulative layer **38** which further surrounds a wire **36**. This embodiment has the utility of extending the sealing range to diameters which are smaller than that of pre-stretched tube **12**, and also fills in irregular surface contours to insure a sealing interface. End-seal enclosure **30** is also useful in sealing cables having end caps.

Referring now to Figure 6, a skirted terminator enclosure (terminal insulator) **60** is shown. Skirted terminator enclosure **60** is used to enclose a shielded cable end where the cable conductor connects to an aerial line or other power equipment. Terminator enclosure **60** may include a plurality of skirts **62**. Skirts **62** are formed integrally with an insulative pre-stretched tube **64**. When in use, skirted terminator enclosure **60** is vertically disposed, and skirts **62** prevent the accumulation of water (during a rainstorm) on the outside of enclosure **60**, which might cause premature failure of insulative PST **64** due to surface tracking caused by electrical influences. For this same reason, a high dielectric constant material **66** is preferred at the end of the cable shield (which is positioned in the central portion of termination enclosure **60**). Alternatively, a second pre-stretched tube (not shown) having a high dielectric constant may be placed under insulative PST **64**, surrounded by dielectric conformable material **66**. Conformable material **16** may be used to seal the ends of skirted terminator enclosure **60**.

## Claims

1. A tubular enclosure (10,60) suitable for sealing connections and end terminals in electrical cables comprising:
an elastomeric tubular member (12,64);
hollow core means (14) for maintaining said elastomeric tubular member (12,64) in a radially expanded state, said core means (14) being removable from said elastomeric tubular member (12,64); and characterised in that said tubular enclosure also comprises
a conformable material (16,66) interposed between said elastomeric tubular member (12,64) and said core means (14).

2. The tubular enclosure (10,60) of Claim 1 wherein said core means (14) comprises a core member constructed of a helically wound flexible strip forming adjacent coils, said adjacent coils being interconnected, and said core member having an outer surface, said outer surface being coated with a release agent (20).

3. The tubular enclosure (10,60) of any preceding claim wherein said elastomeric tubular member (12,64) is electrically insulative, and further comprising a plurality of skirts (62) formed integrally with said elastomeric tubular member (64).

4. The tubular enclosure (10,60) of any one of Claims 1-2 wherein said elastomeric tubular member (12,64) is electrically conductive.

5. The tubular enclosure (10,60) of any preceding claim wherein said conformable material (16,66) is electrically insulative.

6. The tubular enclosure (10,60) of Claim 5 wherein said conformable material (16,66) has a dielectric constant greater than 15.

7. The tubular enclosure (10,60) of any preceding claim said enclosure (10,60) being an elastomeric conformable covering suitable for sealing connections in electrical cables, said core means (14) being disposed within said elastomeric tubular member (12,64), said core means (14) being constructed of a helically wound flexible strip (18) forming adjacent coils and being removable from said tubular member (12,64) by withdrawing the flexible strip (18).

8. The tubular covering (10,60) of any preceding claim wherein said conformable material (16,66) is a mastic.

## Patentansprüche

1. Rohrförmige Umhüllung (10, 60) zum Abdichten von Verbindungen und Endklemmen in Elektrokabeln, umfassend
ein elastomeres rohrförmiges Element (21, 64);
einen hohlen Kern (14), der das elastomere rohrförmige Element (12, 64) in einem radial gedehnten Zustand hält, wobei der Kern (14) aus dem elastomeren rohrförmigen Element (12, 64) entfernt werden kann; und
dadurch gekennzeichnet, daß die rohrförmige Umhüllung außerdem ein anschmiegsames Material (16, 66) umfaßt, das zwischen dem elastomeren rohrförmigen Element (12, 64) und dem Kern (14) angeordnet ist.

2. Rohrförmige Umhüllung (10, 60) nach Anspruch 1, bei der der Kern (14) ein Kernelement umfaßt, das aus einem spiralförmig gewickelten flexiblen Streifen besteht, der nebeneinanderliegende Wicklungen bildet, wobei die nebeneinanderliegenden Wicklungen miteinander verbunden sind, und wobei das Kernelement eine Außenfläche besitzt, die mit einem Trennmittel (20) beschichtet ist.

3. Rohrförmige Umhüllung (10, 60) nach einem der vorhergehenden Ansprüche, bei der das elastomere rohrförmige Element (12, 64) elektrisch isolierend ist, des weiteren umfassend eine Vielzahl von Vorsprüngen (62), die einstükkig mit dem elastomeren rohrförmigen Element (64) ausgebildet sind.

4. Rohrförmige Umhüllung (10, 60) nach einem der Ansprüche 1-2, bei der das elastomere rohrförmige Element (12, 64) elektrisch leitend ist.

5. Rohrförmige Umhüllung (10, 60) nach einem der vorhergehenden Ansprüche, bei der das anschmiegsame Material (16, 66) elektrisch isolierend ist.

6. Rohrförmige Umhüllung (10, 60) nach Anspruch 5, bei der das anschmiegsame Material (16, 66) eine Dielektrizitätskonstante von mehr als 15 besitzt.

7. Rohrförmige Umhüllung (10, 60) nach einem der vorhergehenden Ansprüche, wobei die Umhüllung (10, 60) ein elastomerer anschmiegsamer Überzug ist, der Verbindungen in Elektrokabeln abdichten kann, und der Kern (14) im Inneren des elastomeren rohrförmigen Elements (12, 64) angeordnet ist, wobei der Kern (14) aus einem spiralförmig gewickelten flexiblen Streifen (18) besteht, der nebeneinanderliegende Wicklungen bildet, und aus dem rohrförmigen Element (12, 64) durch Herausziehen des flexiblen Streifens (18) entfernt werden kann.

8. Rohrförmige Abdeckung (10, 60) nach einem der vorhergehenden Ansprüche, bei der das anschmiegsame Material (16, 66) ein Mastix ist.

## Revendications

1. Recouvrement tubulaire (10,60) permettant d'assurer l'étanchéité des connexions et des extrémités des câbles électriques, comprenant:
un élément tubulaire élastomère (12,64);
un noyau creux (14) pour maintenir ledit élément tubulaire élastomère (12,64) à l'état dilaté dans le sens radial, ledit noyau (14) pouvant être enlevé dudit élément élastomère tubulaire (12,64);
et caractérisé en ce que ledit recouvrement tubulaire comprend également un matériau souple (16, 66) interposé entre ledit élément tubulaire élastomère (12,64) et ledit noyau (14).

2. Recouvrement tubulaire (10,60) selon la revendication 1, dans lequel ledit noyau (14) comprend un noyau constitué d'une bande flexible enroulée en hélice, formant des bobines adjacentes, lesdites bobines adjacentes étant interconnectées et ledit noyau ayant une surface extérieure qui est enduite par un agent de décollement (20).

3. Recouvrement tubulaire (10,60) selon l'une quelconque des revendications précédentes, dans lequel ledit élément tubulaire élastomère (12,64) est électriquement isolant et comprend, en outre, plusieurs jupes (62) réalisées d'une pièce avec ledit élément tubulaire élastomère (64).

4. Recouvrement tubulaire (10,60) selon l'une quelconque des revendications 1 ou 2, dans ledit élément élastomère tubulaire (12,64) est électriquement conducteur.

5. Recouvrement tubulaire (10,60) selon l'une quelconque des revendications précédentes, dans lequel ledit matériau souple (16,66) est électriquement isolant.

6. Recouvrement tubulaire (10,60) selon la revendication 5, dans lequel ledit matériau souple (16,66) a une constante diélectrique supérieure à 15.

7. Recouvrement tubulaire (10,60) selon l'une quelconque des revendications précédentes, ledit recouvrement (10,60) étant un recouvrement élastomère souple permettant d'assurer l'étanchéité des connexions des câbles électriques, ledit noyau (14) étant disposé dans ledit élément tubulaire élastomère (12,64), ledit noyau (14) étant constitué d'une bande flexible (18) entourée en hélice, formant des bobines adjacentes et pouvant être enlevée dudit élément tubulaire (12,64) en retirant la bande flexible (18).

8. Recouvrement tubulaire (10,60) selon l'une quelconque des revendications précédentes, dans lequel ledit matériau souple (16,66) est un mastic.
